# EUROPEAN PATENT SPECIFICATION

(11) **EP 1 409 562 B1**
(45) Date of publication and mention of the grant of the patent: **12.04.2006**
(21) Application number: 01955959.0
(22) Date of filing: 25.07.2001
(51) Int. Cl.: C08F 220/38, C08L 33/14, G02B 1/04

(54) **HIGH REFRACTIVE INDEX OPTICAL RESIN COMPOSITION**
POLYMERMISCHUNG MIT HOHEM BRECHUNGSINDEX
COMPOSITION DE RESINE OPTIQUE A INDICE DE REFRACTION ELEVE

(43) Date of publication of application: 21.04.2004
(73) Proprietor: PPG Industries Ohio, Inc., Cleveland, OH 44111 (US)
(72) Inventor: HEROLD, Robert D., Monroeville, PA 15146 (US); OKOROAFOR, Michael O., Roswell, Georgia 30075, Fulton County (US); SMITH, Robert A., Murrysville, PA 15668 (US); GRAHAM, Marvin J., Monroeville, PA 15146 (US)
(74) Representative: Sternagel, Fleischer, Godemeyer & Partner
(86) International application number: PCT/US2001/023396
(87) International publication number: WO 2003/011925

(56) References cited:
- WO-A-01/09206
- FR-A- 2 765 583
- FR-A- 2 777 008
- US-A- 5 384 379
- US-A- 5 422 422

## Description

### DESCRIPTION OF THE INVENTION

The present invention relates to polymerizable organic compositions and polymerizates having a refractive index of at least 1.57 and an Abbe number of at least 33, which are prepared from such compositions. More particularly, the present invention relates to certain polymerizable organic compositions comprising a mixture of thio(meth)acrylate functional monomers, and a comonomer having at least two acryloyl or methacryloyl groups.

Polymeric materials, such as plastics, have been developed as alternatives and replacements for silica based inorganic glass in applications such as, optical lenses, fiber optics, windows and automotive, nautical and aviation transparencies. These polymeric materials can provide advantages relative to glass, including, shatter resistance, lighter weight for a given application, ease of molding and ease of dying. Representative examples of such polymeric materials include, poly(methyl methacrylate), polycarbonate and poly(diethylene glycol bis(allylcarbonate)).

The refractive indices of many polymeric materials are generally lower than that of high index glass. For example, the refractive index of poly(diethylene glycol bis(allylcarbonate)) is about 1.50, compared to that of high index glass, which can range, for example, from 1.60 to 1.80. when fabricating lenses to correct a given degree of visual defect, e.g., a correction for myopia, the use of a polymeric material having a lower refractive index will require a thicker lens relative to a material having a higher refractive index, e.g., high index glass. If the degree of correction required is substantial, e.g., in the case of severe myopia, a lens fabricated from a low index polymeric material can become so thick as to negate any benefit of reduction in weight relative to an equivalent degree of correction obtained from a higher refractive index lens, e.g., a high index glass lens. In addition, thicker optical lenses are not aesthetically desirable.

Polymeric materials prepared from the polymerization of monomers containing aromatic rings typically have high refractive indices. However, articles, such as optical lenses, prepared from such high index polymeric materials generally have lower Abbe numbers (also known as nu-values). Lower Abbe numbers are indicative of an increasing level of chromatic dispersion, which is typically manifested as an optical distortion at or near the rim of the lens.

More recently, polymeric materials having a combination of high refractive indices, e.g., of at least 1.57, and low levels of chromatic dispersion, e.g., having Abbe numbers of at least 33, have been prepared from monomers containing sulfur atoms. While possessing a desirable combination of high refractive indices and Abbe numbers, such sulfur atom containing polymeric materials often have physical properties, e.g., heat and impact resistance, that are in some instances less than desirable. For example, the impact resistance of an optical lens is a particularly important safety related physical property, and improvements in impact resistance are accordingly desirable.

There is, therefore, a need for the continued development of transparent polymerizates, in particular optical lenses, that possess a combination of high refractive index and adequately high Abbe numbers, e.g., preferably at least 33 and more preferably at least 35. It is further desirable that these polymeric materials also possess improved physical properties, such as thermal properties and impact resistance.

United States Patent No. 5,384,379 describes sulfur-containing polymethacrylates produced by the radical polymerization of the unrefined products resulting from the synthesis of a thio(meth)acrylic acid ester monomer. The '379 patent describes the radical polymerization of a monomer component having two thio(meth)acrylic acid ester groups and a chain extended monomer component having two thio(meth)acrylic acid ester groups.

United States Patent No. 5,422,422 describes a high refractive index plastic produced by the reaction of an alkylthiol containing at least two thiol groups, and an alkylpolythiol ester, which contains at least two thiol groups esterified with (meth)acrylic acid. United States Patent No. 4,931,521 describes a process for producing a high refractive index optical material from the radical polymerization of at least one polyfunctional thioacrylate or polyfunctional thiomethacrylate and optionally at least one other radically polymerizable monomer.

FR-A-2 765 583 describes a polymerizable composition comprising 30 to 100 percent of a polyether with terminal acryloyl groups and 0 to 70 percent of an additional radically polymerizable monomer that differs from the first monomer whereby the composition is adjusted in order to achieve a glass transition temperature for the polymerizate to be between 70°C and 110°C.

In accordance with the present invention, there is provided a polymerizable composition comprising:
(a) a mixture of thio(meth)acrylate functional monomers comprising,
   (i) a first thio(meth)acrylate functional monomer represented by the following general formula I, 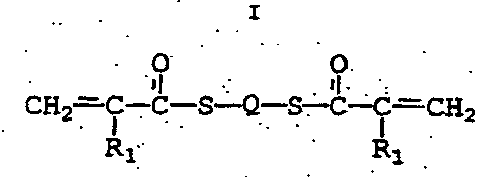 in which R₁ is hydrogen or methyl, and Q is a divalent linking group selected from linear or branched C₂-C₁₂ alkylene, C₄-C₁₂ cyclic alkylene, C₆-C₁₄ arylene and C₇-C₂₆ alkarylene, the carbon chains of Q may optionally contain at least one linkage selected from the group consisting of ether, thioether and combinations thereof; and
   (ii) a second thio(meth)acrylate functional monomer represented by the following general formula II, 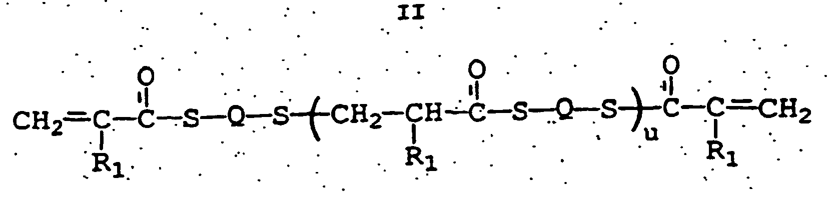
   in which R₁ and Q have the same meanings as described for monomer (a)(i), and u is an integer from 1 to 10, e.g., u may be an integer selected from 1, 2, 3, 4, 5, 6, 7, 8, 9, 10 and combinations thereof; and
(b) a radically polymerizable comonomer having at least two (meth)acryloyl groups selected from the group consisting of:
   (i) a monomer represented by the following general formula III, 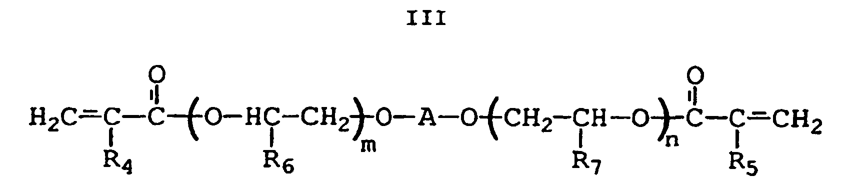 wherein m and n are each a positive number, the sum of m and n being from 0 to 70 (e.g., 2 to 70, 4 to 70, 2 to 6 and 10 to 30), R₄ and R₅ are each hydrogen or methyl, R₆ and R₇ are each hydrogen or C₁ to C₂ alkyl, and A is a divalent linking group selected from the group consisting of linear or branched C₃-C₈ alkylene, cyclic alkylene (usually containing from 5 to 12 carbon atoms), phenylene, C₁ - C₉ alkyl substituted phenylene, and a group represented by the following general formula IV, 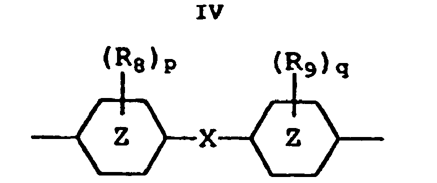 wherein, R₈ and R₉ are each C₁ - C₄ alkyl, chlorine or bromine, p and q are each an integer from 0 to 4, 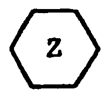 represents a divalent benzene group or a divalent cyclohexane group and X is O, S, -S(O₂)-, -C(O)-, -CH₂-, -CH=CH-, -C(CH₃)₂-, -C (CH₃)(C₆H₅)- or 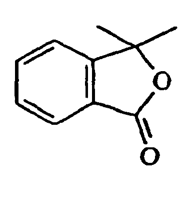 when 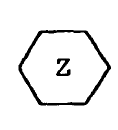 is the divalent benzene group, and X is O, S, -CH₂-, or -C(CH₃)₂- when 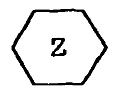 is the divalent cyclohexane group;
   (ii) a bis[(meth)acryloyl-terminated]poly(ethylene glycol) monomer having a number average molecular weight from 200 to 2000 grams / mole;
   (iii) a poly(meth)acryloyl terminated monomer represented by the following general formula V, 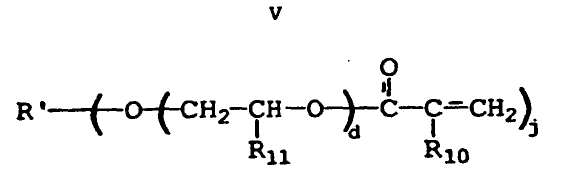 wherein R' is a polyvalent radical of a polyol, R₁₀ is hydrogen or methyl, R₁₁ is hydrogen or C₁ to C₂ alkyl, d is a number from 0 to 20, and j is a whole number from 3 to 6; and
   (iv) mixtures of polymerizable comonomers (i), (ii) and (iii),
wherein the amount of each monomer and comonomer are selected such that a polymerizate of said polymerizable composition has a refractive index of at least 1.57, as determined in accordance with American Standard Test Method (ASTM) number D542-95, and an Abbe number of at least 33, as determined using an appropriate instrument, e.g., a Bausch & Lomb ABBE-3L Refractometer.

Other than in the operating examples, or where otherwise indicated, all numbers or expressions referring to quantities of ingredients, reaction conditions, etc. used in the specification and claims are to be understood as modified in all instances by the term "about."

### DETAILED DESCRIPTION OF THE INVENTION

Polymerizable compositions according to the present invention comprise a mixture of thio(meth)acrylate functional monomers (a)(i) and (a)(ii) as described above. The mixture of thio(meth)acrylate functional monomers preferably contains a minor amount of the first thio(meth)acrylate functional monomer (a)(i) and a major amount of the second thio(meth)acrylate functional monomer (a)(ii). The first thio(meth)acrylate functional monomer (a)(i) is typically present in an amount of from 5 percent by weight to 49 percent by weight, preferably from 10 percent by weight to 45 percent by weight, and more preferably from 20 percent by weight to 40 percent by weight, based on the total weight of the mixture of thio(meth)acrylate functional monomers (a). The second thio(meth)acrylate functional monomer (a)(ii) is typically present in an amount of from 51 percent by weight to 95 percent by weight, preferably from 55 percent by weight to 90 percent by weight, and more preferably from 60 percent by weight to 80 percent by weight, based on the total weight of the mixture of thio(meth)acrylate functional monomers (a).

The weight ratio of the first thio(meth)acrylate functional monomer (a)(i) to the second thio(meth)acrylate functional monomer (a)(ii) in the polymerizable composition of the present invention is typically from 0.1 : 1.0 to 0.6 : 1.0, and preferably from 0.2 : 1.0 or 0.3 : 1.0 to 0.5 : 1.0. The relative amounts of the first and second thio(meth)acrylate functional monomers (a)(i) and (a)(ii) present in the composition may vary as described, and are typically selected such that the physical properties (e.g., refractive index, Abbe number, thermal properties, and in particular impact resistance) of a polymerizate prepared from the polymerizable composition are optimized.

The relative amounts of thio(meth)acrylate functional monomers (a) (i) and (a) (ii) present in the mixture of thio(meth)acrylate functional monomers (a) may be determined by methods known to the skilled artisan. Typically, this determination is accomplished by a comparison of the peak areas resulting from gel permeation chromatography (GPC) analysis of the mixture of thio(meth)acrylate functional monomers using polystyrene standards. As used herein and in the claims, the term "(meth)acrylate" and similar terms, e.g., "(meth)acryloyl," refers to methacrylates, acrylates and mixtures of methacrylates and acrylates.

With reference to general formulas I and II, examples of linear or branched C₂-C₁₂ alkylenes from which Q may be selected, include, but are not limited to, 1,2-ethylene, propylene (e.g., 1,3-propylene and 1,2-propylene), butylene (e.g., 1,4-butylene and 1,2-butylene), pentylene, hexylene, heptylene, octylene, nonylene, decylene, undecylene and dodecylene. Preferred C₂-C₁₂ alkylenes from which Q may be selected include 1,2-ethylene, 1,3-propylene and mixtures thereof. Examples of C₄-C₁₂ cyclic alkylenes from which Q may be selected, include, but are not limited to, cyclobutylene (e.g., 1,3-cyclobutylene), cyclopentylene (e.g., 1,2-cyclopentylene), cyclohexylene (e.g., 1,2-cyclohexylene), cycloheptylene, cycloctylene, cyclononylene, cyclodecylene, cycloundecylene and cyclododecylene (e.g., 1,1-cyclododecylene). Examples of C₆-C₁₄ arylenes from which Q may be selected, include, but are not limited to, phenylene (e.g., 1,2-phenylene and 1,3-phenylene), naphthalenylene (e.g., 1,4-, 1,5-, 2,6- and 2,7- naphthalenylene), and anthracenylene (e.g., 1,3- and 9,10- anthracenylene). Examples of C₇-C₂₆ alkarylenes from which Q may be selected, include, but are not limited to, toluenylene (e.g., 3,4-toluenylene), and bis(phenylene)alkane (e.g., bis(phenylene)methane, 1,2-bis (phenylene) ethane, 2,2-bis(phenylene)propane and 1,3-bis(phenylene)propane).

With further reference to general formulas I and II, the divalent linking group Q is a residue of the polythiol or salt of the polythiol used in the synthesis of the mixture of monomers (a)(i) and (a)(ii). Examples of polythiols (and the corresponding salts derived from such polythiols) that may be used to synthesize the mixture of thio(meth)acrylate monomers of the composition of the present invention, include, but are not limited to, 1,2-ethanedithiol, 2,2'-thiodiethanethiol, 1,3-propanedithiol, 1,4-butanedithiol, 2,3-butanedithiol, 1,5-pentanedithiol, 1,6-hexanedithiol, 1,8-octanedithiol, 1,9-nonanedithiol, 1,3-cyclobutanedithiol, 1,1-cyclobutanedithiol, 1,2-cyclopentanedithiol, 1,2-cyciohexanedithiol, 1,2-benzenedithiol, 1,3-benzenedithiol, 1,4-naphthalenedithiol, 1,5-naphthalenedithiol, 2,6-naphthalenedithiol, 2,7-naphthalenedithiol, 1,3-antracenedithiol, 9,10-antracenedithiol, 3,4-toluenedithiol, 4,5-dimethyl-o-xylene-α,α'-dithiol, bis(phenylthiol)methane, 1,3-bis(pheneylthio)propane and 2,2-bis(phenylthio)propane. Preferably, the polythiol(s) is selected from linear or branched C₂-C₁₂ alkanedithiols, e.g., 1,2-ethanedithiol and 1,3-propanedithiol.

The thio(meth)acrylate functional monomers (a)(i) and (a) (ii) may be prepared separately and then mixed together, or more preferably they are prepared concurrently within the same reaction vessel. The mixture of thio(meth)acrylate functional monomers is typically prepared, as is known to the skilled artisan, from the reaction of: (A) a polythiol, e.g., 1,2-ethanedithiol, or a salt of a polythiol, e.g., 1,2-ethanedithiol disodium salt; with (B) a (meth)acryloyl halide, e.g., (meth)acryloyl chloride, or (meth)acrylic anhydride. The relative amounts of monomers (a)(i) and (a)(ii) resulting from this reaction can be controlled by selecting the molar ratio of reactants (B) to (A). In the case when reactant (B) is (meth)acrylic anhydride, the molar ratio of reactants (B) to (A) is typically from 1.3 : 1 to 2.5 : 1, e.g., from 1.5 : 1 to 2.0 : 1.

A more detailed general method of preparing mixtures of thio(meth)acrylate monomers useful in the compositions of the present invention, in which Q is 1,2-ethylene and R₁ is methyl (with reference to general formulas I and II) is as follows. An aqueous solution containing approximately 18 percent by weight of 1,2-ethylenedithiol disodium salt (e.g., 336.2 parts by weight) is added slowly to a suitable reaction vessel containing methacrylic anhydride (e.g., 100 parts by weight) and a suitable solvent (e.g., 418.2 parts by weight of methylene chloride). The contents of the reaction vessel are mixed under a nitrogen sweep and at a temperature of from 15°C to 30°C during the salt addition. After completion of the 1,2-ethylenedithiol disodium salt addition, the contents of the reaction vessel are typically mixed for an additional 2 hours at a temperature of from 20°C to 30°C under nitrogen sweep. A post-addition of a small amount of methacrylic anhydride (e.g., 2.5 parts by weight) is made to the reaction vessel, followed by the addition of an aqueous solution containing 13 percent by weight of calcium chloride hexahydrate (e.g., 170 parts by weight). The contents of the reaction vessel are then stirred for at least 15 minutes under air.

Work-up of the contents of the reaction vessel typically involves separating out the organic phase, and adding to it a radical polymerization inhibitor (e.g., 0.0075 parts by weight of para-methoxy phenol). The organic phase is washed with an aqueous solution (e.g., 400 parts by weight of an aqueous solution containing 5 percent by weight calcium chloride hexahydrate), followed by removal of organic solvent by vacuum distillation. The product resulting from the described general synthetic method is a mixture of thiomethacrylate monomers comprising a minor amount of the first thiomethacrylate functional monomer (a) (i) (e.g., 35 percent by weight of monomer (a) (i), based on the total weight of monomers (a) (i) and (a) (ii)), and a major amount of at least one chain extended second thiomethacrylate functional monomer (a)(ii) for which u is an integer from 1 to 10 (e.g., 65 percent by weight of monomer (a)(ii), based on the total weight of monomers (a)(i) and (a)(ii)).

The mixture of thio(meth)acrylate functional monomers (a) are typically present in the composition of the present invention in an amount of at least 40 percent by weight, preferably at least 50 percent by weight, and more preferably at least 60 percent by weight, based on the total monomer weight of the polymerizable composition. Also, the mixture of thio(meth)acrylate functional monomers is typically present in the composition in an amount of less than 95 percent by weight, preferably less than 87 percent by weight, and more preferably less than 80 percent by weight, based on the total monomer weight of the polymerizable composition. The mixture of thio(meth)acrylate functional monomers (a) may be present in the polymerizable composition in an amount ranging between any combination of these values, inclusive of the recited values.

Comonomer (b)(i) as described above with reference to general formulas III and IV, may be prepared by methods that are well known in the art. When the sum of m and n is greater than 0, one such commonly used method involves the alkoxylation of a diol, e.g., 4,4'-isopropylidenediphenol, followed by esterification of the alkoxylated diol with a C₁ to C₆ alkyl (meth)acrylate. Classes of diols that may be used to prepare comonomer (b)(i) include, but are not limited to: linear or branched C₃-C₈ alkylenediols, e.g., 1,2-propylenediol, 1,3-propylenediol and octylenediol; cyclic alkylenediols, e.g., 1,4-cyclohexanediol; phenylene diols, such as ortho, meta and para dihydroxy benzene; C₁-C₉ alkyl substituted phenylene diols, e.g., 2,6-dihydroxytoluene and 3-methylcatechol; dihydroxybiphenyls, such as 4,4'-dihydroxybiphenyl; bisphenols such as 4,4'-isopropylidenediphenol; halogenated bisphenols, such as 4,4'-isopropylidenebis(2,6-dibromophenol); and biscyclohexanols, which can be prepared by hydrogenating the corresponding bisphenols, such as 4,4'-isopropylidenebiscyclohexanol. A preferred class of diols are the bisphenols, a particularly preferred example of which is 4,4'-isopropylidenediphenol. Preparation of the comonomer (b)(i) represented by general formula III is described in further detail in United States Patent No. 5,279,243 at column 4, lines 24-63, which disclosure is incorporated herein by reference.

In a preferred embodiment of the present invention, with reference to general formulas III and IV, A is represented by general formula IV, X is -C(CH₃)₂-, 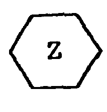 represents a divalent benzene group, p and q are each 0, R₄ and R₅ are each methyl, R₆ and R₇ are each hydrogen, and the sum of m and n is from 10 to 30. Comonomer (b) is preferably selected from monomer (b)(i).

In an embodiment of the present invention, comonomer (b) is selected from monomer (b)(i), which comprises a mixture of a first monomer (b)(i') and a second monomer (b)(i"), each having a different range of (m + n) values. For example, with further reference to general formulas III and IV, A is represented by general formula IV, X is -C(CH₃)₂-, 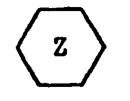 represents a divalent benzene group, p and q are each 0, R₄ and R₅ are each methyl, and R₆ and R₇ are each hydrogen, for each of the first and second monomers (b)(i') and (b)(i''). The sum of m and n for the first monomer (b)(i') is from 2 to 6, and the sum of m and n for the second monomer (b)(i'') is from 10 to 30.

Comonomer (b) (ii) can be prepared as is known in the art from an esterification or transesterification reaction between poly(ethylene glycol) and an alpha - beta ethylenically unsaturated acid or ester such as methacrylic acid, a C₁ to C₆ alkyl methacrylate, acrylic acid, a C₁ to C₆ alkyl acrylate, or a combination thereof. The bis((meth)acryloyl-terminated]poly(ethylene glycol) monomer, preferably has a number average molecular weight from 200 to 1200, more preferably from 500 to 700, grams / mole, as determined by gel permeation chromatography using polystyrene standards. A particularly preferred comonomer (b) (ii) is a bismethacrylate of polyethylene glycol, having a number average molecular weight of 600 grams / mole.

Comonomer (b)(iii), as previously described with reference to general formula V, may be prepared by methods that are well known in the art. For example, when d is greater than zero, comonomer (b) (iii) is typically prepared by alkoxylating a polyol, e.g., trimethylolpropane, followed by esterification of the alkoxylated polyol with a C₁ to C₆ alkyl (meth)acrylate. Preparation of the comonomer (b)(iii) represented by general formula V, is described in further detail in United States Patent No. 5,739,243 at column 5, lines 7-26, which disclosure is incorporated herein by reference.

Examples of polyols suitable for use in preparing comonomer (b)(iii) include, but are not limited to, glycerol, trimethylolpropane, 1,3,5-tris(2-hydroxyethyl)isocyanurate, di-trimethylolpropane, pentaerythritol and dipentaerythritol. A particularly preferred comonomer (b)(iii) may be defined with reference to general formula V wherein R' is a radical of trimethylolpropane, R₁₀ is methyl, d is 0, and j is 3.

As used herein, and with reference to general formula V, the phrase "R' is a polyvalent radical of a polyol" is meant to refer to the polyvalent residue of the polyol used in preparing comonomer (b)(iii). For example, in the case of trimethylolpropane triacrylate (for which j is 3 and R₁₀ is hydrogen), R' is the trivalent radical of trimethylolpropane, i.e., 1,1,1-trimethylenepropane.

Comonomer (b) is typically present in the composition of the present invention in an amount of at least 5 percent by weight, preferably at least 12 percent by weight, and more preferably at least 20 percent by weight, based on the total monomer weight of the polymerizable composition. Comonomer (b) is also typically present in the polymerizable composition in an amount of less than 60 percent by weight, preferably less than 50 percent by weight, and more preferably less than 40 percent by weight, based on the total monomer weight of the polymerizable composition. Comonomer (b) may be present in the polymerizable composition in an amount ranging between any combination of these values, inclusive of the recited values.

The polymerizable composition may optionally further comprise a polythiol monomer having at least two thiol groups. By "thiol group" is meant an -SH group which is capable of forming a covalent bond with an ethylenically unsaturated group, e.g., a vinyl group. As used herein and in the claims, the prefix "thio" (as in "thio(meth)acrylate functional monomer"), refers to a divalent sulfur atom (i.e., -S-) that is not covalently bonded to a hydrogen atom. The term "thiol group" and the prefix "thio" are accordingly distinguishable from each other in the present specification. Not intending to be bound by any theory, it is beleived that covalent bonds are formed between the thiol groups and ethylenically unsaturated groups of the monomers of the present invention by means of a thiol-ene reaction mechanism, as it is known to those of ordinary skill in the art.

Examples of polythiols from which the polythiol monomer may be selected include, but are not limited to, 2,2'-thiodiethanethiol, pentaerythritol tetrakis(3-mercaptopropionate), pentaerythritol tetrakis(2-mercaptoacetate), tetrakis(7-mercapto-2,5-dithiaheptyl)methane, trimethylolpropane tris(3-mercaptopropionate), trimethylolpropane tris(2-mercaptoacetate), 4-mercaptomethyl-3,6-dithia-1,8-octanedithiol, 4-tert-butyl-1,2-benzenedithiol, 4,4'-thiodibenzenethiol, benzenedithiol, ethylene glycol di(2-mercaptoacetate), ethylene glycol di(3-mercaptopropionate), poly(ethylene glycol) di(2-mercaptoacetate), poly(ethylene glycol) di(3-mercaptopropionate), a polythiol monomer represented by the following general formula VI, 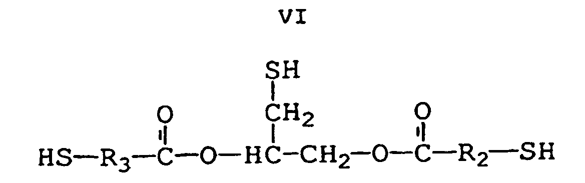 wherein R₂ and R₃ are each selected from the group consisting of straight or branched chain alkylene (usually containing from 1 to 20 carbon atoms, e.g., 1 to 10 carbon atoms, preferably 1 to 4 carbon atoms and more preferably 1 or 2 carbon atoms), cyclic alkylene (usually containing from 5 to 8 carbon atoms in the ring), phenylene and C₁-C₉ alkyl substituted phenylene, and mixtures of such polythiol monomers.

With reference to general formula VI, examples of straight or branched chain alkylene from which R₂ and R₃ may each be selected include, but are not limited to, methylene, ethylene, 1,3-propylene, 1,2-propylene, 1,4-butylene, 1,2-butylene, pentylene, hexylene, heptylene, octylene, nonylene, decylene, undecylene, octadecylene and icosylene. Examples of cyclic alkylenes from which R₂ and R₃ may each be selected include, but are not limited to, cyclopentylene, cyclohexylene, cycloheptylene, cyclooctylene, and alkyl substituted derivatives thereof. The divalent linking groups R₂ and R₃ may also be selected from phenylene and C₁-C₉ alkyl substituted phenylene, e.g., methyl, ethyl, propyl, isopropyl and nonyl substituted phenylene. In a preferred embodiment of the present invention, R₂ and R₃ are each methylene or ethylene.

The polythiol monomer represented by general formula VI may be prepared from an esterification or transesterification reaction between 3-mercapto-1,2-propanediol (Chemical Abstract Service (CAS) Registry No. 96-27-5) and a thiol functional carboxylic acid or carboxylic acid ester in the presence of a strong acid catalyst, e.g., methane sulfonic acid, with the concurrent removal of water or alcohol from the reaction mixture.

As used herein, the polythiol monomer described and named with reference to general formula VI, e.g., thioglycerol bis(2-mercaptoacetate), is meant to include also any related co-product oligomeric species and polythiol monomer compositions containing residual starting materials. For example, when washing the reaction mixture resulting from the esterification of 3-mercapto-1,2-propanediol and a thiol functional carboxylic acid, e.g., 2-mercaptoacetic acid, with excess base, e.g., aqueous ammonia, oxidative coupling of thiol groups may occur. Such an oxidative coupling can result in the formation of oligomeric polythiol species having disulfide linkages, i.e., -S-S- linkages. When used, the polythiol monomer is typically present in the polymerizable composition in an amount of from 1 percent by weight, to 30 percent by weight, based on the total monomer weight of the polymerizable composition, preferably from 1.5 percent by weight to 20 percent by weight, based on the total monomer weight of the polymerizable composition, and more preferably from 2 percent by weight to 15 percent by weight, based on the total monomer weight of the polymerizable composition.

The composition of the present invention may further optionally comprise an anhydride monomer having at least one ethylenically unsaturated group. The anhydride monomer may be selected from methacrylic anhydride, acrylic anhydride, maleic anhydride, 1-cyclopentene-1,2-dicarboxylic anhydride, itaconic anhydride and mixtures thereof. In a preferred embodiment of the present invention, the anhydride monomer is methacrylic anhydride. When used, the anhydride monomer is typically present in the polymerizable composition in an amount of from 0.1 percent by weight, to 35 percent by weight, based on the total monomer weight of the polymerizable composition, preferably from 1.5 percent by weight to 25 percent by weight, based on the total monomer weight of the polymerizable composition, and more preferably from 3 percent by weight to 15 percent by weight, based on the total monomer weight of the polymerizable composition.

The polymerizable composition may further optionally comprise a monomer having a single ethylenically unsaturated radically polymerizable group that is different than the anhydride monomer. Examples of monomers having a single ethylenically unsaturated radically polymerizable group that may optionally be present in the composition include, but are not limited to, acrylic acid; methacrylic acid; esters of acrylic acid such as methyl or ethyl acrylate and 2-hydroxyethyl acrylate; esters of methacrylic acid, such as methyl or ethyl methacrylate, phenoxyethyl methacrylate, isobornyl methacrylate, cyclohexyl methacrylate and 2-hydroxyethyl methacrylate; allyl esters, e.g., allyl benzoate; allyl carbonates, e.g., phenyl allyl carbonate; vinyl esters such as vinyl acetate; styrene; and vinyl chloride. Preferred monoethylenically unsaturated monomers include, methyl methacrylate, isobornyl methacrylate, phenoxyethyl methacrylate, cyclohexyl methacrylate, styrene and mixtures thereof. The monoethylenically unsaturated monomer, when present, is typically present in an amount of from 1 percent by weight, to 20 percent by weight, based on the total monomer weight of the polymerizable composition, preferably from 2 percent by weight to 13 percent by weight, based on the total monomer weight of the polymerizable composition, and more preferably from 3 percent by weight to 7 percent by weight, based on the total monomer weight of the polymerizable composition.

Optionally, the polymerizable composition may further comprise a polyurethane monomer having at least two ethylenically unsaturated radically polymerizable groups, e.g., 2, 3, 4, 5 or 6 ethylenically unsaturated groups. The ethylenically unsaturated radically polymerizable groups of the polyurethane monomer may be selected from allyl, substituted allyl, acrylyl, methacrylyl and combinations thereof. Preferably, the ethylenically unsaturated groups of the polyurethane monomer are selected from allyl, substituted allyl and combinations thereof. The allyl and substituted allyl groups of the polyurethane monomer may be represented by the following general formula VII:

VII H₂C=C(R₁₄)-CH₂-

wherein R₁₄ is hydrogen, halogen or a C₁ to C₄ alkyl group. Most commonly, R₁₄ is hydrogen and consequently general formula VII represents the unsubstituted allyl group, H₂C=CH-CH₂-.

The polyurethane monomer may be prepared by methods that are well known in the art. Such known methods typically comprise a two-step synthetic procedure, in which the first step involves the reaction of a polyol, e.g., poly(ethylene glycol), and a polyisocyanate, e.g., isophorone diisocyanate (IPDI) or toluene diisocyanate (TDI), in a molar ratio such that the reaction product is isocyanate terminated. In the second step, the isocyanate terminated reaction product is then further reacted with a hydroxy functional ethylenically unsaturated material, e.g., allyl alcohol or 2-hydroxyethyl methacrylate, thus forming the polyurethane monomer. Alternatively, the molar ratio of polyol to polyisocyanate in the first step may be selected such that a hydroxy terminated reaction product is obtained. The hydroxy terminated reaction product is then further reacted in the second step with an isocyanate functional ethylenically unsaturated material, e.g., allyl isocyanate.

The polyurethane monomer may also be prepared by means of an art recognized one step synthetic method. For example, a polyol, e.g., pentaerythritol, is reacted with an isocyanate functional ethylenically unsaturated material, e.g., allyl isocyanate, to form the polyurethane monomer.

Classes of polyisocyanates that may be used to prepare the polyurethane monomer include, but are not limited to: alkylene polyisocyanates, e.g., ethylene diisocyanate, trimethylene diisocyanate, tetramethylene diisocyanate and hexamethylene diisocyanate; cycloalkyl diisocyanates, e.g., 1,4-cyclohexane diisocyanate and isophorone diisocyanate; aromatic polyisocyanates wherein the isocyanate groups are not bonded directly to the aromatic ring, e.g., α,α,α',α'-tetramethylxylene diisocyanate (TMXDI) and α,α'-xylene diisocyanate; and aromatic diisocyanates wherein the isocyanate groups are bonded directly to the aromatic ring, e.g., toluene diisocyanate, benzene diisocyanate, naphthalene diisocyanate and benzene triisocyanate. Other useful polyisocyanates include halogenated, alkylated, alkoxylated, nitrated, carbodiimide modified, urea modified and biuret modified derivatives of polyisocyanates belonging to these recited classes; and dimerized and trimerized products of polyisocyanates belonging to these recited classes. Additional examples of polyisocyanates that may be used to prepare the polyurethane monomer include, but are not limited to, those listed in United States Patent 5,221,721 at column 5, lines 34 through 49, which disclosure is incorporated herein by reference.

Classes of polyols that may be used to prepare the polyurethane monomer include, but are not limited to: C₂-C₆ alkylene diols, e.g., ethylene glycol and propylene glycol; poly(alkylene glycols), e.g., diethylene glycol and poly(ethylene glycol); polycarbonate diols; polyester diols; and aliphatic polyols, e.g., trimethylol propane, trimethylol ethane, pentaerythritol, di- trimethylol propane, di-trimethylol ethane and di-pentaerythritol.

Polycarbonate diols may be prepared by methods well known in the art, e.g., from the reaction of glycols with cyclic carbonates. Polycarbonate diols useful in preparing the polyurethane monomer are described in further detail in United States Patent 5,221,721 at column 6, line 42 through column 7, line 19, the disclosure of which is incorporated herein by reference. Polyester diols may be prepared by art-recognized methods, e.g., from the ring opening of lactones, such as epsilon caprolactone. Polyester diols useful in preparing the polyurethane monomer are described in further detail in United States Patent 5,221,721 at column 6, lines 32 through 41, which disclosure is incorporated herein by reference.

The polyurethane monomer is preferably an aliphatic polyurethane monomer. As used herein and in the claims, by "aliphatic polyurethane monomer" is meant a polyurethane monomer which is substantially free of carbamate (or urethane) linkages that are attached directly to aromatic groups. Typically, less than 1 percent by weight, based on the total weight of polyols and polyisocyanates used to prepare the aliphatic polyurethane monomer have hydroxyl and isocyanate groups bonded directly to an aromatic group.

The polyurethane monomer typically has a number average molecular weight of from 500 to 100,000, e.g., from 500 to 10,000, as determined by gel permeation chromatography using polystyrene standards. In an embodiment of the present invention, the polyurethane monomer has a number average molecular weight of less than 1000, e.g., 700. When used, the polyurethane monomer is typically present in the polymerizable composition of the present invention in an amount of from 1 percent by weight to 30 percent by weight, based on the total monomer weight of the polymerizable composition, preferably from 2 percent by weight to 20 percent by weight, based on the total monomer weight of the polymerizable composition, and more preferably from 3 percent by weight to 10 percent by weight, based on the total monomer weight of the polymerizable composition.

The total amount of all monomers and comonomers present in the polymerizable composition of the present invention add up to 100 percent by weight. In an embodiment of the present invention, for example, the polymerizable composition comprises: from 40 percent by weight to 95 percent by weight of the thio(meth)acrylate monomer mixture (a); and from 5 percent by weight to 60 percent by weight of the comonomer (b) having at least two (meth)acryloyl groups. In another embodiment of the present invention, the polymerizable composition comprises: from 40 percent by weight to 95 percent by weight of the thio(meth)acrylate monomer mixture (a); from 5 percent by weight to 60 percent by weight of the comonomer (b) having at least two (meth)acryloyl groups; from 1 percent by weight to 30 percent by weight of the polythiol monomer (c) having at least two thiol groups; and from 0.1 percent by weight to 35 percent by weight of the anhydride monomer (d) having at least one ethylencially unsaturated group. The amounts of all monomers (a) and (b), and (a) through (d) being based on the total monomer weight of the polymerizable composition.

Polymerization of the polymerizable composition of the present invention may be accomplished by adding to the composition an initiating amount of material capable of generating free radicals, such as organic peroxy compounds or azobis(organonitrile) compounds, i.e., an initiator. Methods for polymerizing compositions having therein monomers containing radically polymerizable groups are well known to the skilled artisan and any of those well known techniques may be used to polymerize the aforedescribed polymerizable compositions. Such polymerization methods include thermal polymerization, photopolymerization or a combination thereof.

Examples of suitable organic peroxy compounds, that may be used as thermal polymerization initiators include: peroxymonocarbonate esters, such as tertiarybutylperoxy 2-ethylhexyl carbonate and tertiarybutylperoxy isopropyl carbonate; peroxyketals, such as 1,1-di-(t-butyl peroxy)-3,3,5-trimethylcyclohexane; peroxydicarbonate esters, such as di(2-ethylhexyl) peroxydicarbonate, di(secondary butyl) peroxydicarbonate and diisopropylperoxydicarbonate; diacyperoxides, such as 2,4-dichlorobenzoyl peroxide, isobutyryl peroxide, decanoyl peroxide, lauroyl peroxide, propionyl peroxide, acetyl peroxide, benzoyl peroxide, p-chlorobenzoyl peroxide; peroxyesters such as t-butylperoxy pivalate, t-butylperoxy octylate, and t-butylperoxyisobutyrate; methylethylketone peroxide, and acetylcyclohexane sulfonyl peroxide. Preferred thermal initiators are those that do not discolor the resulting polymerizate. A particularly preferred thermal initiator is 1,1-di-(t-butyl peroxy)-3,3,5-trimethylcyclohexane, which is commercially available from Elf Atochem under the tradename LUPERSOL® 231.

Examples of suitable azobis(organonitrile) compounds, that may be used as thermal polymerization initiators include azobis(isobutyronitrile) and azobis(2,4-dimethylvaleronitrile).

The amount of thermal polymerization initiator used to initiate and polymerize the polymerizable composition of the present invention may vary and will depend on the particular initiator used. Only that amount that is required to initiate and sustain the polymerization reaction is required, i.e., an initiating amount. With respect to the preferred peroxy compound, 1,1-di-(t-butyl peroxy)-3,3,5-trimethylcyclohexane, typically between 0.01 and 3.0 parts of that initiator per 100 parts of monomers (phm) present in the polymerizable composition may be used. More usually, between 0.05 and 1.0 phm is used to initiate the polymerization. Typically, the thermal cure cycle involves heating the polymerizable composition in the presence of the initiator from room temperature to 85°C to 130°C over a period of from 2 hours to 48 hours.

Photopolymerization of the polymerizable composition may be carried out in the presence of a photopolymerization initiator using ultraviolet light, visible light, or a combination thereof. Examples of suitable photopolymerization initiators include benzoin, benzoin methyl ether, benzoin isobutyl ether, benzophenone, acetophenone, 4,4'-dichlorobenzophenone, diethoxyacetophenone, 2-hydroxy-2-methylpropiophenone, 1-hydroxycyclohexyl phenyl ketone, 2-isopropylthixanthone and 2,4,6-trimethylbenzoyldiphenylphosphine oxide. The amount of photopolymerization initiator used to initiate and polymerize the polymerizable organic compositions of the present invention vary and will depend on the particular initiator used. Only that amount that is required to initiate and sustain the polymerization reaction is required, i.e., an initiating amount. A preferred photopolymerization initiator is 2-hydroxy-2-methylpropiophenone. The photopolymerization initiator is typically used in an amount from 0.01 percent to 2 percent by weight, based on the total weight of monomer components.

The light source used for the photopolymerization is preferably selected from those which emit ultraviolet light. The light source is preferably a mercury lamp, a germicidal lamp or a xenon lamp. Visible light, e.g., sunlight, may also be used. The exposure time may differ depending upon, e.g., the wavelength and intensity of the light source and the shape of the mold, and is typically determined empirically.

The amount of thermal polymerization initiator or photopolymerization initiator and/or the consequent cure cycle should be adequate to produce a polymerizate according to the present invention which has an initial (zero second) Barcol hardness of at least 1, preferably at least 4, e.g., from 4 to 35.

It should be understood that the polymerizable composition of the present invention may be polymerized in the absence of a polymerization initiator. In particular, photopolymerization of the polymerizable composition may be achieved in the absence of any externally added photopolymerization or thermal initiators.

Various conventional additives may be incorporated with the polymerizable composition of the present invention. Such additives may include light stabilizers, heat stabilizers, antioxidants, ultraviolet light absorbers, mold release agents, static (non-photochromic) dyes, photochromic dyes or substances, pigments, and flexibilizing additives that are not radically polymerizable (e.g., alkoxylated phenol benzoates, poly(alkylene glycol) dibenzoates, and poly(alkoxylated) bisphenols). Antiyellowing additives, e.g., 3-methyl-2-butenol, organo pyrocarbonates and triphenyl phosphite (CAS registry no. 101-02-0), may also be added to polymerizable compositions of the present invention to enhance resistance to yellowing. Such additives are typically present in the compositions of the present invention in amounts totaling less than 10 % by weight, preferably less than 5 % by weight, and more preferably less than 3 % by weight, based on the total weight of the polymerizable composition.

It is also contemplated that a polymerization moderator, or mixtures of polymerization moderators, may be added to the polymerizable composition of the present invention to minimize the formation of distortions, such as striations, in polymerizates obtained therefrom. Suitable polymerization moderators include for example, dilauryl thiodipropionate, terpinolene, 1-isopropyl-4-methyl-1,4-cyclohexadiene, 1-isopropyl-4-methyl-1,3-cyclohexadiene, alpha-methyl styrene, 2,4-diphenyl-4-methyl-1-pentene, 1,1-diphenylethylene, cis-1,2-diphenylethylene, 2,6-dimethyl-2,4,6-octatriene, 4-tert-butylpyrocatechol, and mixtures thereof. The polymerization moderator may be added to the polymerizable composition in an amount from 0.01 percent to 10 percent by weight, preferably from 0.1 percent to 8 percent by weight and more preferably from 0.3 percent to 5 percent by weight, based on the total weight of the polymerizable composition.

Polymerizates obtained from polymerization of polymerizable compositions of the present invention will be solid, and preferably transparent, e.g., suitable for optical or ophthalmic applications. The polymerizates of the present invention will also have a refractive index of at least 1.57, preferably at least 1.58 and more preferably at least 1.59, adequately high Abbe numbers, e.g., an Abbe number of at least 33 and preferably at least 35, and an initial (zero second) Barcol hardness of at least 1. Solid articles that may be prepared from polymerizable compositions of the present invention include, but are not limited to, optical lenses, such as plano and ophthalmic lenses, sun lenses, windows, automotive transparencies, e.g., windshields, sidelights and backlights, and aircraft cransparencies, etc.

When used to prepare photochromic articles, e.g., lenses, the polymerizate should be transparent to that portion of the electromagnetic spectrum which activates the photochromic substance(s) incorporated in the matrix, i.e., that wavelength of ultraviolet (UV) light that produces the colored or open form of the photochromic substance and that portion of the visible spectrum that includes the absorption maximum wavelength of the photochromic substance in its UV activated form, i.e., the open form. Photochromic substances that may be utilized with the polymerizates of the present invention are organic photochromic compounds or substances containing same that may be either (a) incorporated (e.g., dissolved, dispersed or diffused) into such polymerizates; or (b) added to the polymerizable composition prior to polymerization.

A first group of organic photochromic substances contemplated for use to form the photochromic articles of the present invention are those having an activated absorption maximum within the visible range of greater than 590 nanometers, e.g., between greater than 590 to 700 nanometers. These materials typically exhibit a blue, bluish-green, or bluish-purple color when exposed to ultraviolet light in an appropriate solvent or matrix. Examples of classes of such substances that are useful in the present invention include, but are not limited to, spiro(indoline)naphthoxazines and spiro(indoline)benzoxazines. These and other classes of such photochromic substances are described in the open literature. See for example, U.S. Patents: 3,562,172; 3,578,602; 4,215,010; 4,342,668; 5,405,958; 4,637,698; 4,931,219; 4,816,584; 4,880,667; 4,818,096. Also see for example: Japanese Patent Publication 62/195383; and the text, Techniques in Chemistry, Volume III, "Photochromism," Chapter 3, Glenn H. Brown, Editor, John Wiley and Sons, Inc., New York, 1971.

A second group of organic photochromic substances contemplated for use to form the photochromic articles of the present invention are those having at least one absorption maximum and preferably two absorption maxima, within the visible range of between 400 and less than 500 nanometers. These materials typically exhibit a yellow-orange color when exposed to ultraviolet light in an appropriate solvent or matrix. Such compounds include certain chromenes, i.e., benzopyrans and naphthopyrans. Many of such chromenes are described in the open literature, e.g., U.S. Patents 3,567,605; 4,826,977; 5,066,818; 4,826,977; 5,066,818; 5,466,398; 5,384,077; 5,238,931; and 5,274,132.

A third group of organic photochromic substances contemplated for use to form the photochromic articles of the present invention are those having an absorption maximum within the visible range of between 400 to 500 nanometers and another absorption maximum within the visible range of between 500 to 700 nanometers. These materials typically exhibit color(s) ranging from yellow/brown to purple/gray when exposed to ultraviolet light in an appropriate solvent or matrix. Examples of these substances include certain benzopyran compounds, having substituents at the 2-position of the pyran ring and a substituted or unsubstituted heterocyclic ring, such as a benzothieno or benzofurano ring fused to the benzene portion of the benzopyran. Such materials are the subject of U.S. Patent No. 5,429,774.

Other photochromic substances contemplated are photochromic organo-metal dithizonates, i.e., (arylazo)-thioformic arylhydrazidates, e.g., mercury dithizonates, which are described in, for example, U.S. Patent 3,361,706. Fulgides and fulgimides, e.g. the 3-furyl and 3-thienyl fulgides and fulgimides, are described in U.S. Patent 4,931,220 at column 20, line 5 through column 21, line 38.

The disclosures relating to such photochromic substances in the aforedescribed patents are incorporated herein, in toto, by reference. The photochromic articles of the present invention may contain one photochromic substance or a mixture of photochromic substances, as desired. Mixtures of photochromic substances may be used to attain certain activated colors such as a near neutral gray or brown.

Each of the photochromic substances described herein may be used in amounts and in ratios (when mixtures are used) such that a polymerizate to which the mixture of compounds is applied or in which they are incorporated exhibits a desired resultant color, e.g., a substantially neutral color such as shades of gray or brown when activated with unfiltered sunlight, i.e., as near a neutral color as possible given the colors of the activated photochromic substances. The relative amounts of the aforesaid photochromic substances used will vary and depend in part upon the relative intensities of the color of the activated species of such compounds, and the ultimate color desired.

The photochromic compounds or substances described herein may be applied to or incorporated into the polymerizate by various methods described in the art. Such methods include dissolving or dispersing the substance within the polymerizate, e.g., imbibition of the photochromic substance into the polymerizate by immersion of the polymerizate in a hot solution of the photochromic substance or by thermal transfer; providing the photochromic substance as a separate layer between adjacent layers of the polymerizate, e.g., as a part of a polymer film or polymer layer; and applying the photochromic substance as part of a coating or polymer layer placed on the surface of the polymerizate. The term "imbibition" or "imbibe" is intended to mean and include permeation of the photochromic substance alone into the polymerizate, solvent assisted transfer absorption of the photochromic substance into a porous polymer, vapor phase transfer, and other such transfer mechanisms.

The amount of photochromic substance(s) or composition containing photochromic substance(s) applied to or incorporated into the polymerizate is not critical provided that a sufficient amount is used to produce a photochromic effect discernible to the naked eye upon activation. Generally such amount can be described as a photochromic amount. The particular amount used depends often upon the intensity of color desired upon irradiation thereof and upon the method used to incorporate or apply the photochromic substances. Typically, the more photochromic substance applied or incorporated, the greater is the color intensity. Generally, the amount of total photochromic substance incorporated into or applied to a photochromic optical polymerizate may range from 0.15 to 0.35 milligrams per square centimeter of surface to which the photochromic substance(s) is incorporated or applied.

It is also contemplated that photochromic substances may be added to the polymerizable compositions of the present invention prior to curing. However, when this is done it is preferred that the photochromic substance(s) be resistant to potentially adverse interactions with initiator(s) that may be present and / or the polythiol monomer and the sulfide linkages that form within the polymerizate. These adverse interactions can result in deactivation of the photochromic substance(s), e.g., by trapping them in either an open or closed form. Photochromic substances can also include photochromic pigments and organic photochromic substances encapsulated in metal oxides, the latter of which are described in U.S. Patents 4,166,043 and 4,367,170. Organic photochromic substances sufficiently encapsulated within a matrix of an organic polymerizate, as described in U.S. Patent 4,931,220, may also be incorporated into the polymerizable compositions of the present invention prior to curing.

The present invention is more particularly described in the following examples, which are intended to be illustrative only, since numerous modifications and variations therein will be apparent to those skilled in the art. Unless otherwise specified, all parts and percentages are by weight.

### Polymerizable Casting Compositions

Casting compositions were prepared from the ingredients enumerated in Table 1. Examples 1 and 2 are comparative examples and Examples 3 and 4 are representative of embodiments of the present invention. The casting compositions of Examples 1 and 3 were thermally cured, and the casting compositions of Examples 2 and 4 were cured with ultraviolet light.

| Table 1 | | | | |
|---|---|---|---|---|
| Casting Compositions | | | | |
| | Example 1 | Example 2 | Example 3 | Example 4 |
| Mixture of thiomethacrylate functional monomers (a) | 100.0 | 0 | 95.0 | 0 |
| Mixture of thiomethacrylate functional monomers (b) | 0 | 100.0 | 0 | 71.8 |
| BPA(10EO)DMA monomer (c) | 0 | 0 | 5.0 | 15.0 |
| BPA(2EO)DMA monomer (d) | 0 | 0 | 0 | 3.4 |
| TMP-TMA monomer (e) | 0 | 0 | 0 | 4.8 |
| 2-phenoxyethyl methacrylate monomer (f) | 0 | 0 | 0 | 5.0 |
| LUPERSOL 231 initiator (g) | 0.2 | 0 | 0.2 | 0 |
| DAROCURE 1173 initiator (h) | 0 | 0.3 | 0 | 0.3 |

| | | | | |
|---|---|---|---|---|
| (a) The mixture of thiomethacrylate functional monomers was prepared according to the general method as described previously in the specification, and with reference to general formulas I and II, Q is 1,2-ethylene and R₁ is methyl. The mixture of thiomethacrylate functional monomers was analyzed by GPC and determined (by means of a comparison of peak areas) to be composed of about 35 percent by weight of the first thiomethacrylate functional monomer (a)(i), and about 65 percent by weight of a mixture of second thiomethacrylate functional monomers (a)(ii), based on the total weight of the mixture of thiomethacrylate functional monomers. The mixture of thiomethacrylate functional monomers had a spindle viscosity of 120 centiPoise (cPs). | | | | |
| (b) The mixture of thiomethacrylate functional monomers was prepared according to the general method as described previously in the specification, and with reference to general formulas I and II, Q is 1,2-ethylene and R₁ is methyl. The mixture of thiomethacrylate functional monomers was analyzed by GPC and determined (by means of a comparison of peak areas) to be composed of about 33 percent by weight of the first thiomethacrylate functional monomer (a)(i), and about 67 percent by weight of a mixture of second thiomethacrylate functional monomers (a)(ii), based on the total weight of the mixture of thiomethacrylate functional monomers. The mixture of thiomethacrylate functional monomers had a spindle viscosity of 230 ceniPoise (cPs). | | | | |
| (c) Bisphenol A dimethacrylate ethoxylated with 10 moles of ethylene oxide, obtained from Sartomer, under the designation SR-480 monomer. | | | | |
| (d) Bisphenol A dimethacrylate ethoxylated with 2 moles of ethylene oxide, obtained from Akzo, under the designation DIACRYL 101 monomer. | | | | |
| (e) trimethylolpropane tris(methacrylate) monomer, obtained from Sartomer, under the designation SR-350 monomer. | | | | |
| (f) 2-phenoxyethyl methacrylate monomer was obtained from Sartomer, under the designation SR-340 monomer. | | | | |
| (g) LUPERSOL 231 - an initiator having the reported chemical formula of 1,1-di(tert-butylperoxy)-3,3,5-trimethylcyclohexane, CAS Registry No. 6731-36-8, which is available commercially from Elf Atochem. | | | | |
| (h) DARACURE 1173 - an initiator having the reported chemical formula of 2-hydroxy-2-methylpropiophenone, which is available commercially from Ciba-Geigy Corp. | | | | |

Thermally polymerized cast sheets of the polymerizable casting compositions represented by Examples 1 and 3 of Table 1 were made in the following manner. The ingredients as listed were first charged to a suitable vessel followed by the addition of the LUPERSOL 231 initiator. The resulting initiated polymerizable casting composition was mixed using a magnetic stir plate and magnetic stir bar at ambient room temperature, passed through a 5 micron filter, and degassed in a vacuum chamber at about 100 mm of Hg. The mixed casting compositions were then poured into glass molds having interior dimensions of (a) 15.24 x 15.24 x 0.32 cm, and (b) 15.24 x 15.24 x 0.16 cm. The filled molds were cured according to the following sequential thermal cure cycle: (1) heating from 40°C to 125°C at a constant rate over a period of 15 hours; (2) isothermal hold at 125°C for 1 hour; and (3) cooled from 125°C to 95°C at a constant rate over a period of 2.5 hours; end of cycle.

Physical properties of the thermally cast sheets were measured and the results are summarized in Table 2. The 0.16 cm thick cast sheets were only used for impact test evaluations, while the 0.32 cm thick cast sheets were used for all other physical property testing.

The photopolymerizable casting compositions represented by Examples 2 and 4 of Table 1 were mixed, filtered and degassed in a manner similar to that described with regard to Examples 1 and 3. The mixed and degassed monomer compositions of Examples 2 and 4 were poured into ultraviolet (UV) light transmissive glass molds (a) having interior dimensions of 15.24 x 15.24 x 0.32 cm, and (b) 6-base plano lens molds having an interior thickness of 0.15 cm. The contents of the filled molds were photopolymerized in the following manner. (1) A filled mold was passed five times beneath a UV light source, each time alternating the side of the mold facing the UV light source. (2) The mold was then placed in a 120°C electric oven for one hour, and cooled at a linear rate to 95°C over 30 minutes. (3) The mold was removed from the oven, and the castings were demolded. (4) The demolded casting was placed in a 110°C electric oven for 30 minutes, followed by removal from the oven and cooling to room temperature. The UV light source used was a FUSION SYSTEMS D-Bulb, which was positioned at a distance of 15 cm (6 inches) above the glass molds. The glass molds were passed beneath the UV light source at a linear rate of 91 cm (3 ft) / minute using a model no. C636R conveyor belt system available commercially from LESCO Inc. A single pass beneath the UV light source as described was found to impart 4.9 Joules / cm² of UV energy to the interior of the glass molds used.

Physical properties of the photocured cast sheets and plano lenses were measured and the results are summarized in Table 2. The plano lenses prepared from the casting compositions of Examples 2 and 4 were used for impact strength testing only, while the cast sheets (prepared in the 15.24 x 15.24 x 0.32 cm interior dimensioned molds) were used for all other physical property testing.

| Table 2 | | | | |
|---|---|---|---|---|
| Physical Data Relating to Examples 1 - 4 | | | | |
| Physical Test | Example 1 | Example 2 | Example 3 | Example 4 |
| Heat Distortion Temperature (i) (°C @ 10 mils) | 57 | 50 | 54 | 51 |
| Total Deflection (j) (mils) @ 130°C | 34 | 32 | 41 | 31 |
| Refractive Index (k) (n_{D}²⁰) | 1.6128 | 1.6155 | 1.6087 | 1.5933 |
| Abbe Number (1) | 36.5 | 36.0 | 36.0 | 38.0 |
| % Transmittance (m) | 89.84 | N.D.' | 90.15 | 90.40 |
| Impact Strength % Breaks at 0.20 Joules (n) | 100 | 100 | 33 | 25 |
| Average center thickness (mm) of the plano lenses tested for impact strength (o) | N.A.² | 1.5 | N.A.² | 1.4 |

| | | | | |
|---|---|---|---|---|
| ¹N.D. - Not Determined. | | | | |
| ²N.A. - Not Applicative | | | | |
| (i) Heat Distortion Temperature is the temperature at which the test specimen was observed to have a deflection of 10 mils (254 microns), and was determined in accordance with ASTM D 648-95 using a Custom Scientific Instruments Model HDV3 DTUL/Vicat Softening Point Apparatus. | | | | |
| (j) Total Deflection at 130°C is the total deflection (in units of mils) of the test specimen that was observed at this temperature, and was determined in accordance with ASTM D 648-95 using a Custom Scientific Instruments Model HDV3 DTUL/Vicat Softening Point Apparatus. | | | | |
| (k) Refractive Index n_{D}²⁰ was determined in accordance with ASTM D542-95, using a Bausch & Lomb Abbe-3L Refractometer. | | | | |
| (l) Abbe Number was determined using a Bausch & Lomb ABBE-3L Refractometer. | | | | |
| (m) Percent (%) Transmittance was determined in accordance with ASTM D 1003-95, using a HunterLab model ColorQuest II spectrophotometer. | | | | |
| (n) The impact strength test was performed by dropping a 16.3 gram, 15.9 mm diameter stainless steel ball from a height of 127 cm onto the center of a test sample supported on an O-ring having a diameter of 2.9 cm. For Examples 1 and 3, the test samples were 3.8 cm x 3.8 cm x 0.16 cm sheets. With Examples 2 and 4, the test samples were 6-base piano lenses having an average center thickness of 1.4 or 1.5 mm (the steel ball being dropped onto the convex side of the lenses). For each of Examples 1 and 3, 9 flat sheets were tested. For each of Examples 2 and 4, 4 6-base piano lenses were tested. The data shown is the percent of samples tested that failed at an impact strength of 0.20 Joules (0.15 foot-pounds). When the 16.3 gram steel ball was observed to have driven a hole through the test sample or caused the test sample to fall into pieces, that test sample was determined to have failed the impact test. | | | | |
| (o) The average center thickness of the plano lenses tested for impact resistance were determined using a micrometer. | | | | |

The results summarized in Table 2 show that polymerizates prepared from the thermal polymerization of compositions according to the present invention, i.e., Example 3, have a combination of high refractive index and Abbe values, coupled with improved impact strength relative to comparative compositions, i.e., Example 1. The results summarized in Table 2 also show that polymerizates prepared from the photopolymerization of compositions according to the present invention, i.e., Example 4, have a combination of high refractive index and Abbe values, coupled with improved impact strength relative to comparative compositions, i.e., Example 2.

The present invention has been described with reference to specific details of particular embodiments thereof. It is not intended that such details be regarded as limitations upon the scope of the invention except insofar as and to the extent that they are included in the accompanying claims.

## Claims

1. A polymerizable composition comprising:
(a) a mixture of thio(meth)acrylate functional monomers comprising.
(i) a first thio(meth)acrylate functional monomer represented by the following general formula, 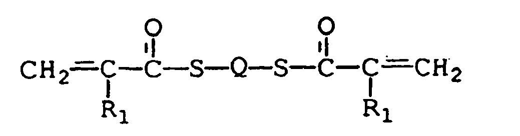 in which R₁ is hydrogen or methyl, and Q is a divalent linking group selected from linear or branched C₂-C₁₂ alkylene, C₄-C₁₂ cyclic alkylene, C₆-C₁₄ arylene and C₇₋C₂₆ alkarylene, the carbon chains of Q may optionally contain at least one linkage selected from the group consisting of ether, thioether and combinations thereof: and
(ii) a second thio(meth)acrylate functional monomer represented by the following general formula, 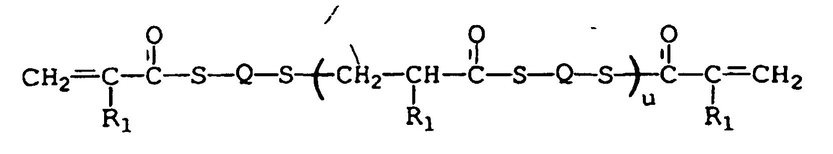 in which R₁ and Q have the same meanings as described for monomer (a)(i), and u is an integer from 1 to 10:
**characterized in that** the composition further comprises
(b) a radically polymerizable comonomer having at least two (meth)acryloyl groups selected from the group consisting of:
(i) a monomer represented by the following general formula, 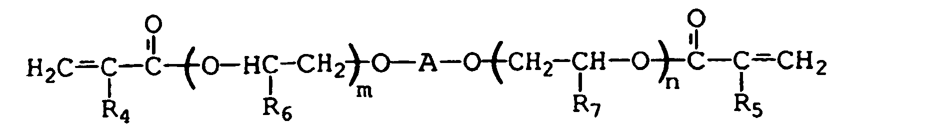 wherein m and n are each a positive number, the sum of m and n being from 0 to 70, R₄ and R₅ are each hydrogen or methyl, R₆ and R₇ are each hydrogen or C₁ to C₂ alkyl, and A is a divalent linking group selected from the group consisting of linear or branched C₃-C₈ alkylene, cyclic alkylene, phenylene, C₁-C₉ alkyl substituted phenylene, and a group represented by the following general formula, 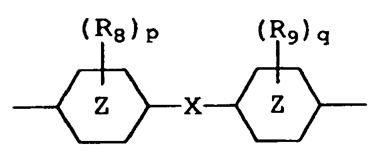 wherein. R₈ and R₉ are each C₁ - C₄ alkyl, chlorine or bromine, p and q are each an integer from 0 to 4, 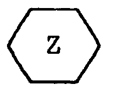 represents a divalent benzene group or a divalent cyclohexane group and X is O, S, -S(O₂)-, -C(O)-, -CH₂-, -CH=CH-, -C(CH₃)₂-, -C(CH₃)(C₆H₅)- or 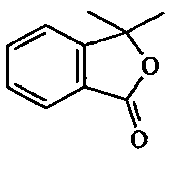 when 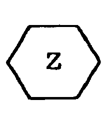 is the divalent benzene group, and X is O, S, -CH₂-, or -C(CH₃)₂₋when 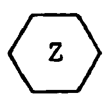 is the divalent cyclohexane group:
(ii) a bis[(meth)acryloyl-terminated]poly(ethylene glycol) monomer having a number average molecular weight from 200 to 2000 grams / mole;
(iii) a poly(meth)acryloyl terminated monomer represented by the following general formula. 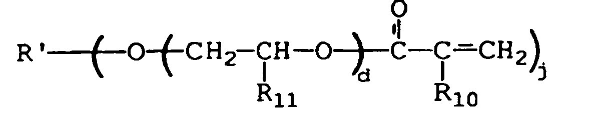 wherein R' is a polyvalent radical of a polyol, R₁₀ is hydrogen or methyl, R₁₁ is hydrogen or C₁ to C₂ alkyl, d is a number from 0 to 20, and j is a whole number from 3 to 6; and
(iv) mixtures of polymerizable comonomers (i), (ii) and (iii).
and **in that** the amount of each monomer and comonomer are selected such that a polymerizate of said polymerizable composition has a refractive index of at least 1.57 and an Abbe number of at least 33.

2. The polymerizable composition of claim 1 wherein Q is selected from linear or branched C₂-C₁₂ alkylene.

3. The polymerizable composition of claim 2 wherein Q is selected from 1,2-ethylene, 1,3-propylene and mixtures thereof, and R₁ is methyl.

4. The polymerizable composition of claim 1 wherein said mixture of thio(meth)acrylate functional monomers (a) comprises a major amount of said second thio(meth)acrylate monomer (a)(ii).

5. The polymerizable composition of claim 4 wherein said first thio(meth)acrylate functional monomer (a)(i) is present in an amount of from 5 percent by weight to 49 percent by weight, based on the total weight of said mixture of thio(meth)acrylate functional monomers, and said second thio(meth)acrylate functional monomer (a)(ii) is present in an amount of from 51 percent to 95 percent by weight, based on the total weight of said mixture of thio(meth)acrylate functional monomers.

6. The polymerizable composition of claim 1 wherein A is represented by the following general formula. 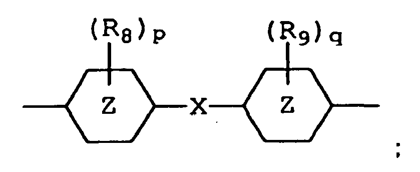 X is -C(CH₃)₂-: 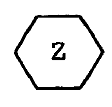 represents a divalent benzene group: p and q are each 0; R₄, R₅ and R₁₀ are each methyl; R₆, R₇ and R₁₁ are each hydrogen; the sum of m and n is from 10 to 30; R' is a radical of trimethylolpropane: j is 3; and d is 0.

7. The polymerizable composition of claim 1 wherein comonomer (b) is selected from monomer (b)(i), monomer (b)(i) comprising a mixture of a first monomer (b)(i') and a second monomer (b)(i''), for each of monomers (b)(i') and (b)(i''): A is represented by the following general formula. 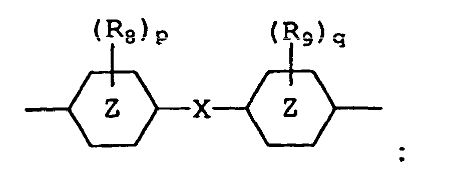 X is -C(CH₃)₂-; 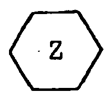 represents a divalent benzene group: p and q are each 0: R₄ and R₅ are each methyl ; and R₆ and R₇ are each hydrogen; the sum of m and n of said first monomer (b)(i') is from 2 to 6, and the sum of m and n of said second monomer (b)(i") is from 10 to 30.

8. The polymerizable composition of claim 1 wherein said thio(meth)acrylate monomer mixture (a) is present in said composition in an amount of from 40 percent by weight to 95 percent by weight, based on the total monomer weight of said composition; and comonomer (b) is present in said composition in an amount of from 5 percent by weight to 60 percent by weight, based on the total monomer weight of said composition.

9. The polymerizable composition of claim 1 further comprising a polythiol monomer having at least two thiol groups.

10. The polymerizable composition of claim 9 wherein said polythiol monomer is selected from the group consisting of 2,2'-thiodiethanethiol, pentaerythritol tetrakis(3-mercaptopropionate), pentaerythritol tetrakis(2-mercaptoacetate), tetrakis(7-mercapto-2,5-dithiaheptyl)methane, trimethylolpropane tris(3-mercaptopropionate), trimethylolpropane tris(2-mercaptoacetate). 4-mercaptomethyl-3,6-dithia-1,8-octanedithiol, 4-tert-butyl-1,2-benzenedithiol, 4,4'-thiodibenzenethiol, benzenedithiol, ethylene glycol di(2-mercaptoacetate), ethylene glycol di(3-mercaptopropionate), poly(ethylene glycol) di(2-mercaptoacetate), poly(ethylene glycol) di(3-mercaptopropionate), a polythiol monomer represented by the following general formula. 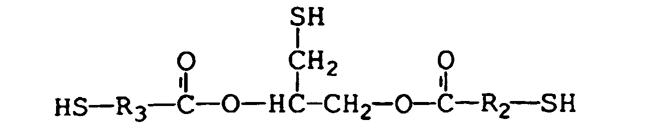 wherein R₂ and R₃ are each selected from the group consisting of straight or branched chain alkylene, cyclic alkylene, phenylene and C₁ - C₉ alkyl substituted phenylene, and mixtures of such polythiol monomers.

11. The polymerizable composition of any of the preceding claims further comprising an anhydride monomer having at least one ethylenically unsaturated group.

12. The polymerizable composition of claim 11 wherein said anhydride monomer is selected from the group consisting of methacrylic anhydride, acrylic anhydride, maleic anhydride, 1-cyclopentene-1.2-dicarboxylic anhydride, itaconic anhydride and mixtures thereof.

13. The polymerizable composition of any of the preceding claims further comprising a monomer having a single ethylenically unsaturated radically polymerizable group.

14. The polymerizable composition of claim 13 wherein said monomer having a single ethylenically unsaturated radically polymerizable group is selected from the group consisting of methyl methacrylate, isobornyl methacrylate, phenoxyethyl methacrylate, cyclohexyl methacrylate, styrene and mixtures thereof.

15. The polymerizable composition of any of the preceding claims further comprising a polyurethane monomer having at least two ethylenically unsaturated radically polymerizable groups.

16. The polymerizable composition of claim 15 wherein said polyurethane monomer is an aliphatic polyurethane monomer having at least two ethylenically unsaturated radically polymerizable groups selected from allyl, substituted allyl and combinations thereof.

17. A polymerizate **characterized in that** the polymerizate is obtained from the polymerizable composition of any of claims 1-16.

18. A photochromic article comprising:
(a) the polymerizate of claim 17; and
(b) a photochromic amount of organic photochromic substance.

19. The photochromic article of claim 18 wherein the organic photochromic substance is selected from the group consisting of spiro(indoline)naphthoxazines, spiro(indoline)benzoxazines, benzopyrans, naphthopyrans, chromenes, organo-metal dithizonates, fulgides and fulgimides and mixtures of such organic photochromic substances.

## Patentansprüche

1. Polymerisierbare Zusammensetzung enthaltend:
(a) eine Mischung von thio(meth)acrylatfunktionellen Monomeren enthaltend:
(i) ein erstes thio(meth)acrylatfunktionelles Monomer, das durch die folgende allgemeine Formel wiedergegeben ist, 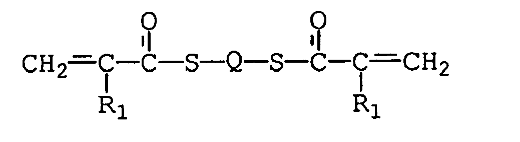 in der R₁ Wasserstoff oder Methyl ist und Q eine divalente Verbindungsgruppe, ausgewählt aus linearem oder verzweigtem C₂-C₁₂-Alkylen, cyclischem C₄-C₁₂-Alkylen, C₆₋C₁₄-Arylen und C₇-C₂₆-Alkarylen, ist, wobei die Kohlenstoffketten von Q optional wenigstens eine Verknüpfung, ausgewählt aus der Gruppe bestehend aus Ether, Thioether und Kombinationen davon, enthalten können,und
(ii) ein zweites thio(meth)acrylatfunktionelles Monomer, das durch die folgende allgemeine Formel wiedergegeben ist, 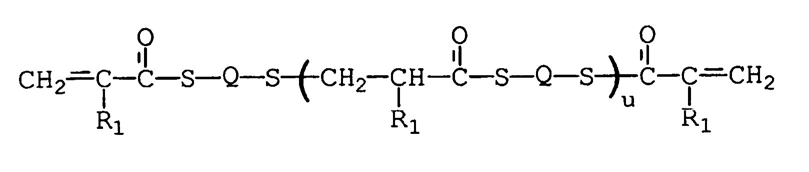 in der R₁ und Q dieselben Bedeutungen wie oben für Monomer (a) (i) beschrieben haben und U eine ganze Zahl von 1 bis 10 ist,
**dadurch gekennzeichnet, dass** die Zusammensetzung zusätzlich
(b) ein radikalisch polymerisierbares Comonomer mit wenigstens zwei (Meth)acrylolgruppen enthält, ausgewählt aus der Gruppe bestehend aus:
(i) einem Monomer, das durch die folgende allgemeine Formel wiedergegeben ist, 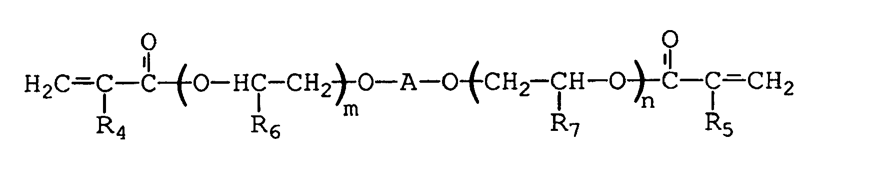 worin m und n jeweils positive Zahlen sind, die Summe von m und n gleich 0 bis 70 ist, R₄ und R₅ jeweils Wasserstoff oder Methyl sind, R₆ und R₇ jeweils Wasserstoff oder C₁-C₂-Alkyl sind und A eine divalente Verbindungsgruppe ist, ausgewählt aus der Gruppe bestehend aus linearem oder verzweigtem C₃-C₈-Alkylen, cyclischem Alkylen, Phenylen, C₁-C₉₋alkylsubstituiertem Phenylen und einer Gruppe, die durch die folgende allgemeine Formel wiedergegeben ist, 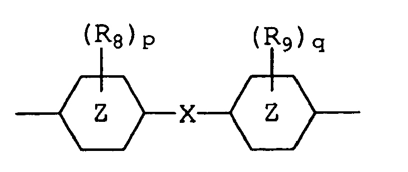 worin R₈ und R₉ jeweils C₁-C₄-Alkyl, Chlor oder Brom sind, p und q jeweils eine ganze Zahl von 0 bis 4 sind, 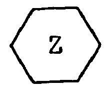 eine divalente Benzolgruppe oder eine divalente Cyclohexangruppe darstellt und X gleich O, S, -S(O₂)-, -C(O)-, -CH₂- -CH=CH-, -C(CH₃)₂-, -C(CH₃)(C₆H₅)- oder 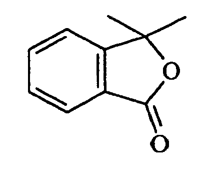 ist, wenn 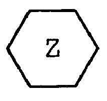 die divalente Benzolgruppe ist, und X gleich O, S, -CH₂- oder -C(CH₃)₂- ist, wenn 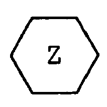 die divalente Cyclohexangruppe ist;
(ii) einem Poly(ethylenglykol)monomer mit endständigen Bis(meth)acryloylgruppen mit einem zahlenmittleren Molekulargewicht von 200 bis 2.000 g/mol,
(iii) einem poly(meth)acryloylterminiertem Monomer, das durch folgende allgemeine Formel wiedergegeben ist, 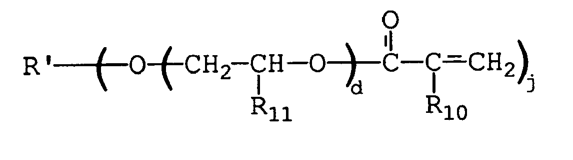 worin R' ein polyvalenter Rest eines Polyols ist, R₁₀ gleich Wasserstoff oder Methyl ist, R₁₁ gleich Wasserstoff oder C₁₋C₂-Alkyl ist, d eine Zahl von 0 bis 20 ist und j eine ganze Zahl von 3 bis 6 ist, und
(iv) Mischungen von polymerisierbaren Comonomeren (i), (ii) und (iii),
und **dadurch**, dass die Menge jedes Monomers und Comonomers so ausgewählt ist, dass ein Polymerisat dieser polymerisierbaren Zusammensetzung einen Brechungsindex von wenigstens 1,57 und eine Abbe-Zahl von wenigstens 33 aufweist.

2. Polymerisierbare Zusammensetzung nach Anspruch 1, worin Q ausgewählt ist aus linearem oder verzweigtem C₂-C₁₂-Alkylen.

3. Polymerisierbare Zusammensetzung nach Anspruch 2, worin Q ausgewählt ist aus 1,2-Ethylen, 1,3-Propylen und Mischungen davon und R₁ gleich Methyl ist.

4. Polymerisierbare Zusammensetzung nach Anspruch 1, wobei diese Mischung von thio(meth)acrylatfunktionellen Monomeren (a) eine Hauptmenge dieses zweiten Thio(meth)acrylatmonomers (a)(ii) enthält.

5. Polymerisierbare Zusammensetzung nach Anspruch 4, wobei dieses erste thio(meth)acrylatfunktionelle Monomer (a)(i) in einer Menge von 5 bis 49 Gewichtsprozent, bezogen auf das Gesamtgewicht dieser Mischung von thio(meth)acrylatfunktionellen Monomeren, vorhanden ist und dieses zweite thio(meth)acrylatfunktionelle Monomer (a)(ii) in einer Menge von 51 bis 95 Gewichtsprozent, bezogen auf das Gesamtgewicht dieser Mischung von thio(meth)acrylatfunktionellen Monomeren, vorhanden ist.

6. Polymerisierbare Zusammensetzung nach Anspruch 1, worin A durch die folgende allgemeine Formel wiedergegeben ist, 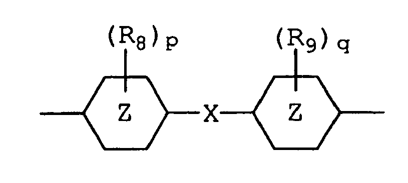 X gleich -C(CH₃)₂- ist; 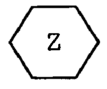 für eine divalente Benzolgruppe steht, p und q jeweils 0 sind; R₄, R₅ und R₁₀ jeweils Methyl sind; R₆, R₇ und R₁₁ jeweils Wasserstoff sind; die Summe von m und n gleich 10 bis 30 beträgt; R' ein Rest von Trimethylolpropan ist; j gleich 3 ist und d gleich 0 ist.

7. Polymerisierbare Zusammensetzung nach Anspruch 1, worin Comonomer (b) ausgewählt ist aus Monomer (b)(i), Monomer (b)(i) eine Mischung eines ersten Monomers (b) (i') und eines zweiten Monomers (b)(i") enthält, für jedes der Monomere (b)(i') und (b)(i") A durch die folgende allgemeine Formel wiedergegeben ist, 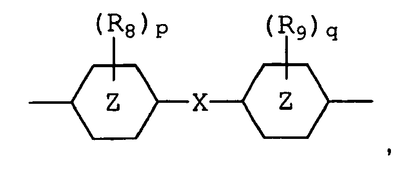 X gleich -C(CH₃)₂- ist, 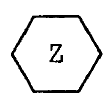 für eine divalente Benzolgruppe steht, p und q jeweils 0 sind, R₄ und R₅ jeweils Methyl sind und R₆ und R₇ jeweils Wasserstoff sind; die Summe von m und n des ersten Monomers (b)(i') gleich 2 bis 6 beträgt und die Summe von m und n dieses zweiten Monomers (b)(i") gleich 10 bis 30 beträgt.

8. Polymerisierbare Zusammensetzung nach Anspruch 1, worin diese Thio(meth)acrylatmonomermischung (a) in dieser Zusammensetzung in einer Menge von 40 bis 95 Gewichtsprozent, bezogen auf das Gesamtmonomergewicht dieser Zusammensetzung, vorhanden ist und Comonomer (b) in dieser Zusammensetzung in einer Menge von 5 bis 60 Gewichtsprozent, bezogen auf das Gesamtmonomergewicht dieser Zusammensetzung, vorhanden ist.

9. Polymerisierbare Zusammensetzung nach Anspruch 1, die weiterhin ein Polythiolmonomer mit wenigstens zwei Thiolgruppen enthält.

10. Polymerisierbare Zusammensetzung nach Anspruch 9, wobei dieses Polythiolmonomer ausgewählt ist aus der Gruppe bestehend aus 2,2'-Thiodiethanthiol, Pentaerythritoltetrakis(3-mercaptopropionat), Pentaerythritoltetrakis(2-mercaptoacetat), Tetrakis(7-mercapto-2,5-dithiaheptyl)methan, Trimethylolpropantris(3-mercaptopropionat), Trimethylolpropantris(2-mercaptoacetat), 4-Mercaptomethyl-3,6-dithia-1,8-octandithiol, 4-tert.-Butyl-1,2-benzoldithiol, 4,4'-Thiodibenzolthiol, Benzoldithiol, Ethylenglykoldi(2-mercaptoacetat), Ethylenglykoldi(3-mercaptopropionat), Poly(ethylenglykol)di(2-mercaptoacetat), Poly(ethylenglykol)di(3-mercaptopropionat), ein Polythiolmonomer, das durch die folgende allgemeine Formel wiedergegeben ist, 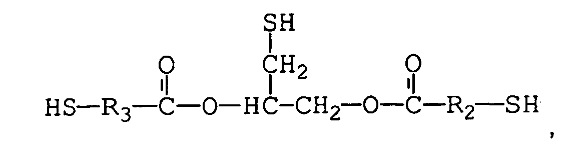 worin R₂ und R₃ jeweils ausgewählt sind aus der Gruppe, bestehend aus gradkettigen oder verzweigten Alkylenketten, cyclischem Alkylen, Phenylen und C₁-C₉-alkylsubstituiertem Phenylen, und Mischungen solcher Polythiolmonomere.

11. Polymerisierbare Zusammensetzung nach einem der vorstehenden Ansprüche, die weiterhin ein Anhydridmonomer mit wenigstens einer ethylenisch ungesättigten Gruppe enthält.

12. Polymerisierbare Zusammensetzung nach Anspruch 11, wobei dieses Anhydridmonomer ausgewählt ist aus der Gruppe bestehend aus Methacrylsäureanhydrid, Acrylsäureanhydrid, Maleinsäureanhydrid, 1-Cyclopenten-1,2-dicarbonsäureanhydrid, Itaconsäureanhydrid und Mischungen davon.

13. Polymerisierbare Zusammensetzung nach einem der vorstehenden Ansprüche, die zusätzlich ein Monomer mit einer einzelnen ethylenisch ungesättigten radikalisch polymerisierbaren Gruppe enthält.

14. Polymerisierbare Zusammensetzung nach Anspruch 13, wobei dieses Monomer mit einer einzelnen ethylenisch ungesättigten radikalisch polymerisierbaren Gruppe ausgewählt ist aus der Gruppe bestehend aus Methylmethacrylat, Isobornylmethacrylat, Phenoxyethylmethacrylat, Cyclohexylmethacrylat, Styrol und Mischungen davon.

15. Polymerisierbare Zusammensetzung nach einem der vorstehenden Ansprüche, die zusätzlich ein Polyurethanmonomer mit wenigstens zwei ethylenisch ungesättigten radikalisch polymerisierbaren Gruppen enthält.

16. Polymerisierbare Zusammensetzung nach Anspruch 15, wobei dieses Polyurethanmonomer ein aliphatisches Polyurethanmonomer mit wenigstens zwei ethylenisch ungesättigten radikalisch polymerisierbaren Gruppen, ausgewählt aus Allyl, substituiertem Allyl und Kombinationen davon, ist.

17. Polymerisat, **dadurch gekennzeichnet, dass** das Polymerisat aus der polymerisierbaren Zusammensetzung nach einem der Ansprüche 1 bis 16 erhalten wird.

18. Photochromer Gegenstand enthaltend:
(a) ein Polymerisat nach Anspruch 17 und
(b) eine photochrome Menge einer organischen photochromen Substanz.

19. Photochromer Gegenstand nach Anspruch 18, wobei die organische photochrome Substanz ausgewählt ist aus der Gruppe bestehend aus Spiro(indolin)naphthoxazinen, Spiro(indolin)benzoxazinen, Benzopyranen, Naphthopyranen, Chromenen, Organometalldithizonaten, Fulgiden und Fulgimiden und Mischungen solcher organischen photochromen Substanzen.

## Revendications

1. Composition polymérisable comprenant :
(a) un mélange de monomères à fonctionnalité thio(méth)acrylate comprenant
(i) un premier monomère à fonctionnalité thio(méth)acrylate représenté par la formule générale suivante 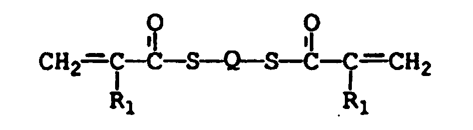 dans laquelle R₁ représente de l'hydrogène ou un radical méthyle, et Q représente un groupe de liaison divalent choisi parmi des radicaux alkylène en C₂ à C₁₂, alkylène cyclique en C₄ à C₁₂, arylène en C₆ à C₁₄ et alkarylène en C₇ à C₂₆, les chaînes carbonées de Q pouvant éventuellement contenir au moins un lien choisi dans le groupe formé par un éther, un thioéther et des combinaisons de ceux-ci, et
(ii) un deuxième monomère à fonctionnalité thio(méth)acrylate représenté par la formule générale suivante : 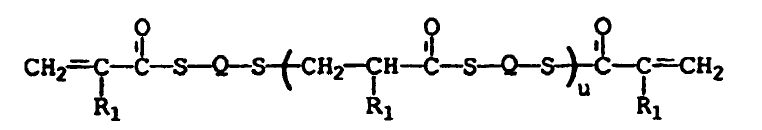 dans laquelle R₁ et Q ont les mêmes significations que celles décrites pour le monomère (a) (i), et u est un nombre entier de 1 à 10,
**caractérisé en ce que** la composition comprend en outre
(b) un comonomère polymérisable par voie radicalaire possédant au moins deux groupes (méth)acryloyle choisis dans le groupe formé par
(i) un monomère représenté par la formule générale suivante : 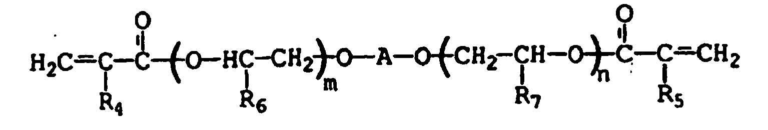 dans laquelle m et n représentent chacun un nombre positif, la somme de m et n étant de 0 à 70, R₄ et R₅ représentent chacun de l'hydrogène ou un radical méthyle, R₆ et R₇ représentent chacun de l'hydrogène ou un radical alkyle en C₁ à C₂, et A un groupe de liaison divalent choisi dans le groupe formé par des radicaux alkylène en C₃ à C₈ linéaires ou ramifiés, alkylène cyclique, phénylène, phénylène substitué par de l'alkyle en C₁ à C₉, et un groupe représenté par la formule générale suivante : 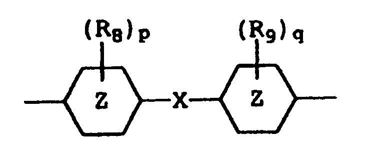 dans laquelle R₈ et R₉ représentent chacun un radical alkyle en C₁ à C₄, du chlore ou du brome, p et q sont chacun un nombre entier de 0 à 4, 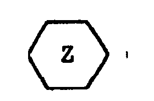 représente un groupe benzène divalent ou un groupe cyclohexane divalent et X représente 0, S, -S(O₂), -C(O)-, -CH₂-, -CH=CH-, -C(CH₃)₂, -C(CH₃)(C₆H₅)- ou 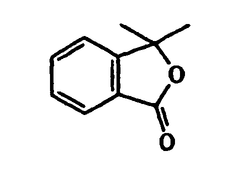 lorsque 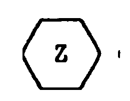 est le groupe benzène divalent, et X représente O, S, -CH₂- ou -C(CH₃)₂- lorsque 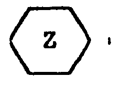 est le groupe cyclohexane divalent,
(ii) un monomère de polyéthylène glycol à terminaison bis(méth)acryloyle possédant une moyenne numérique de poids moléculaire de 200 à 2000 g/mole,
(iii) un monomère à terminaison poly(méth)acryloyle représenté par la formule générale suivante : 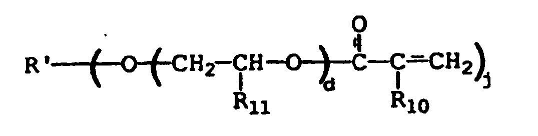 dans laquelle R' est un radical polyvalent d'un polyol, R₁₀ est de l'hydrogène ou un radical méthyle, R₁₁ représente de l'hydrogène ou un radical alkyle en C₁ à C₂, d est un nombre entre 0 et 20, et j est un nombre entier entre 3 et 6, et
(iv) des mélanges de comonomères polymérisables (i), (ii) et (iii),
et où la quantité de chaque monomère et comonomère est choisie de manière qu'un polymère de ladite composition polymérisable ait un indice de réfraction d'au moins 1,57 et un nombre d'Abbe d'au moins 33.

2. Composition polymérisable selon la revendication 1, dans laquelle Q est choisi parmi des radicaux alkylène linéaires ou ramifiés en C₂ à C₁₂.

3. Composition polymérisable selon la revendication 2, dans laquelle Q est choisi parmi du 1,2-éthylène, du 1,3-propylène et leurs mélanges, et R₁ est un radical méthyle.

4. Composition polymérisable selon la revendication 1, dans laquelle ledit mélange de monomères (a) à fonctionnalité thio(méth)acrylate comprend une quantité majeure dudit deuxième monomère à fonctionnalité thio(méth)acrylate (a) (ii).

5. Composition polymérisable selon la revendication 4, dans laquelle ledit premier monomère à fonctionnalité thio(méth)acrylate (a) (i) est présent en une quantité de 5% en poids à 49% ert poids, sur base du poids total dudit mélange de monomères à fonctionnalité thio(méth)acrylate, et ledit deuxième monomère à fonctionnalité thio(méth)acrylate (a) (ii) est présent en une quantité de 51% à 95% en poids, sur base du poids total dudit mélange de monomères à fonctionnalité thio(méth)acrylate+

6. Composition polymérisable selon la revendication 1, dans laquelle A est représenté par la formule générale suivante : 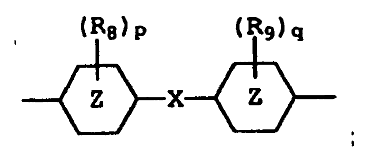 dans laquelle X représente -C(CH₃)₂, 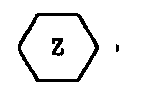 représente un groupe benzène divalent, p et q valent chacun 0, R₄, R₅ et R₁₀ représentent chacun du méthyle, R₆, R₇ et R₁₁ représentent chacun de l'hydrogène, la somme de m et n vaut de 10 à 30, R' est un radical de triméthylolpropane, j vaut 3 et d vaut 0.

7. Composition polymérisable selon la revendication 1, dans laquelle le comonomère (b) est choisi parmi le monomère (b) (i), le monomère (b) (i) comprenant un mélange d'un premier monomère (b) (i') et d'un deuxième monomère (b) (i") et pour chacun des monomères (b) (i') et (b) (i"), A est représenté par la formule générale suivante : 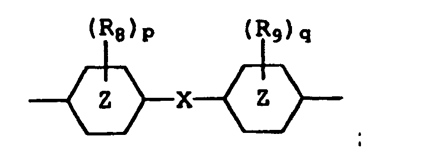 dans laquelle X représente -C(CH₃)₂, 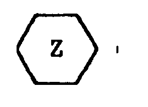 représente un groupe benzène divalent, p et q valent chacun 0, R₄ et R₅ représentent chacun du méthyle, R₆ et R₇ représentent chacun de l'hydrogène, la somme de m et n dudit monomère (b) (i') vaut de 2 à 6, et la somme de m et n dudit deuxième monomère (b) (i") vaut de 10 à 30.

8. Composition polymérisable selon la revendication 1, dans laquelle ledit mélange (a) de monomères à fonctionnalité thio(méth)acrylate est présent dans ladite composition en une quantité de 40% en poids à 95% en poids, sur base du poids total de monomères de ladite composition, et le comonomère (b) est présent dans ladite composition en une quantité de 5% en poids à 60% en poids, sur base du poids total de monomères de ladite composition.

9. Composition polymérisable selon la revendication 1, comprenant en outre un monomère de polythiol possédant au moins deux groupes thiol.

10. Composition polymérisable selon la revendication 9, dans laquelle ledit monomère de polythiol est choisi dans le groupe formé par le 2,2'-thiodiéthanethiol, le tétrakis(3-mercaptopropionate) de pentaérythritol, le tétrakis(2-mercaptoacétate) de pentaérythritol, le tétrakis(7-mercapto-2,5-dithiaheptyl)méthane, le tris(3-mercaptopropionate) de triméthylolpropane, le tris(2-mercaptoacétate) de triméthylolpropane, le 4-mercaptométhyl-3,6-dithia-1,8-octanedithiol, le 4-tert-butyl-1,2-benzène-dithiol, le 4,4'-thiodibenzène-thiol, le benzènedithiol, le di(2-mercaptoacétate) d'éthylène glycol, le di(3-mercaptopropionate) d'éthylène glycol, le di(2-mercaptoacétate) de poly(éthylène glycol), le di(3-mercaptopropionate) de poly(éthylène glycol), un monomère polythiol représenté par la formule générale suivante : 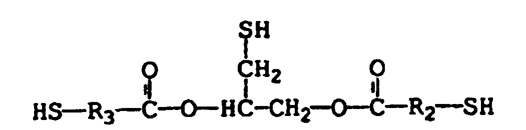 dans laquelle R₂ et R₃ sont chacun choisis dans le groupe formé par de l'alkylène à chaîne linéaire ou ramifiée, de l'alkylène cyclique, du phénylène et du phénylène substitué par de l'alkyle en C₁ à C₉, et des mélanges de ces monomères de polythiol.

11. Composition polymérisable selon l'une quelconque des revendications qui précèdent, comprenant en outre un monomère anhydride possédant au moins un groupe éthyléniquement insaturé.

12. Composition polymérisable selon la revendication 11, dans laquelle ledit monomère anhydride est choisi dans le groupe formé par l'anhydride méthacrylique, l'anhydride acrylique, l'anhydride maléique, l'anhydride 1-cyclopentène-1,2-dicarboxylique, l'anhydride itaconique et leurs mélanges.

13. Composition polymérisable selon l'une quelconque des revendications qui précèdent, comprenant en outre un monomère comportant un seul groupe éthyléniquement insaturé polymérisable par voie radicalaire.

14. Composition polymérisable selon la revendication 13, dans laquelle ledit monomère possédant un seul groupe éthyléniquement insaturé polymérisable par voie radicalaire est choisi dans le groupe formé par le méthacrylate de méthyle, le méthacrylate d'isobornyle, le méthacrylate de phénoxyéthyle, le méthacrylate de cyclohexyle, le styrène et leurs mélanges.

15. Composition polymérisable selon l'une quelconque des revendications qui précèdent, comprenant en outre un monomère de polyuréthanne possédant au moins deux groupes éthyléniquement insaturés polymérisables par voie radicalaire.

16. Composition polymérisable selon la revendication 15, dans laquelle ledit monomère de polyuréthanne est un monomère polyuréthannique aliphatique comportant au mois deux groupes éthyléniquement insaturés polymérisables par voie radicalaire choisis parmi les groupes allyle, allyle substitués et des combinaisons de ceux-ci.

17. Polymère **caractérisé en ce que** le polymère est obtenu à partir de la composition polymérisable selon l'une quelconque des revendications 1 à 16.

18. Article photochromique comprenant :
(a) le polymère selon la revendication 17, et
(b) une quantité photochromique de substance photochromique organique.

19. Article photochromique selon la revendication 18, dans lequel la substance photochromique est choisie dans le groupe formé par des spiro(indoline)naphtoxazines, des spiro(indoline)-benzoxazines, des benzopyranes, des naphtopyranes, des chromènes, des dithizonates organométalliques, des fulgides et des fulgimides, et des mélanges de telles substances photochromiques organiques.
